# EUROPÄISCHE PATENTSCHRIFT

(11) **EP 1 130 375 B1**
(45) Veröffentlichungstag und Bekanntmachung des Hinweises auf die Patenterteilung: **04.03.2009**
(21) Anmeldenummer: 01100110.4
(22) Anmeldetag: 12.01.2001
(51) Int. Cl.: G01M 9/06, G01L 5/16

(54) **Messsystem zur Ermittlung von Luftdaten eines Luftfahrzeugs sowie ein Verfahren zur Bestimmung der Luftdaten**
System and method for measuring aircraft flight data
Système et méthode de mesure des données de vol pour aéronef

(30) Priorität: 18.01.2000 DE 10001813
(43) Veröffentlichungstag der Anmeldung: 05.09.2001
(73) Patentinhaber: EADS Deutschland GmbH, 81663 München (DE)
(72) Erfinder: Hakenesch, Peter, Dr., 85521 Ottobrunn (DE)

(56) Entgegenhaltungen:
- EP-A- 0 335 045
- DE-A- 3 543 431
- US-A- 5 117 687

## Beschreibung

Die Erfindung betrifft ein Meßsystem zur Ermittlung von Luftdaten eines Luftfahrzeugs sowie ein Verfahren zur Bestimmung der Luftdaten, wobei das Luftfahrzeug beispielsweise ein bemanntes oder unbemanntes Flugzeug, oder auch ein Flugkörper sein kann.

Konventionelle Luftdatensysteme ermitteln vorzugsweise die momentanen und lokalen Strömungswinkel eines Luftfahrzeuges sowie die momentanen und lokalen statischen und dynamischen Drücke oder nur einzelne dieser Größen. Aus diesen lokalen Größen werden in üblicher Weise sogenannte ungestörte Größen ermittelt, d.h. Anstell-, Schiebewinkel sowie Drücke, die momentan in der vom Luftfahrzeug ungestörten Strömung vorliegen. Diese ungestörten Größen dienen zur Bestimmung der Fluglage und der Geschwindigkeit sowie weiterer flugspezifischer Größen des Luftfahrzeugs. Derartige konventionelle Luftdatensysteme basieren üblicherweise auf der Messung von Drücken. Dabei werden aus der Kontur herausragende Pitot-Drucksonden verwendet. Weiterhin gibt es Meßvorrichtungen, die die Druckverteilungen der Oberfläche der Rumpfnase messen (z.B. DE 3 543 431). Alternative oder auch zusätzliche Möglichkeiten bestehen in der Verwendung von Anstell- und Schiebewinkelgebern in der Art von Windfahnen, die ebenfalls aus der Flugzeugkontur herausragen. Zur Messung der Strömungsverhältnisse am Flugzeug können auch optische Lasermeßmethoden verwendet werden, die jedoch wegen der Größe und Komplexität der Laser, aber auch wegen der Ungewißheit der Häufigkeit und Größe der in der Luft befindlichen Aerosole noch keinen operationellen Betrieb erlauben. Die aus der Flugzeugkontur herausragenden Meßsonden haben den Nachteil, daß sie den Gesamtwiderstand des Luftfahrzeugs erhöhen. Auch sind sie durch ein mögliches Auftreffen von Fremdkörpern, also z.B. durch Vogelschlag, gefährdet. Ein weiterer Nachteil ist, daß in vielen Flugzeugen ein aktives Bordradar im vorderen Teil des Rumpfnasensegments vorhanden ist, so daß in diesem Bereich derartige Meßsonden nicht vorgesehen werden können, ohne das Bordradar in seiner Funktion zu stören. Ein Anbringen der Meßsonden im Bereich hinter dem vorderen Rumpfnasensegment erfordert jedoch einen sehr großen Kalibrier- und Korrekturaufwand für den Einsatz im Betrieb.

Die Messung der Druckverteilung an der Rumpfspitze oder an anderen der Strömung zugewandten Teile des Luftfahrzeugs kann auch durch in der Oberfläche integrierte Drucksensoren vorgenommen werden. Die Lösung bietet den Vorteil, daß der Gesamtwiderstand des Luftfahrzeugs nicht erhöht wird. Ein weiterer Vorteil ist, daß die militärische Entdeckbarkeit des Flugzeugs durch aus der Flugzeugkontur herausragende Meßsonden wegen der geringen Radarsignatur nicht wesentlich beeinträchtigt ist. Diese Art der Meßsonden birgt jedoch die Gefahr, daß die Messungen, z.B. durch Eisansatz, Schmutz oder Vogelschlag effektiv verändert werden können. Dadurch werden die Druckmessungen erheblich beeinträchtigt oder sogar unmöglich, was zu einem Totalausfall zumindest einzelner Sensoren und sogar des Luftdatensystems führen kann.

Es ist daher die Aufgabe der Erfindung, ein Meßsystem zur Messung von Luftdaten für ein Luftfahrzeug sowie ein Verfahen zur Durchführung derselben zu schaffen, dessen Komplexität verhältnismäßig gering und das weitgehend resistent gegen die Einwirkung von Gegenständen oder Bedingungen in der Umgebung des Luftfahrzeugs ist.

Diese Aufgabe wird mit den Merkmalen des Anspruchs 1 und des Anspruchs 8 gelöst. Alternative Ausführungsformen sind in den von diesen abhängigen Ansprüchen angegeben.

Die erfindungsgemäße Meßvorrichtung weist keine aus der Rumpfoberfläche des Luftfahrzeugs herausragende Bauteile auf, erfordert keine Druckbohrungen zur Druckmessung an der Oberfläche und ist resistent gegen die Einwirkung von Gegenständen bzw. Fremdkörpern sowie ungünstigen Umgebungsbedingungen. Durch die Integration des Meßsystems im vorderen Rumpfbereich, z.B. in der Schnittebene zwischen Radom und Flugzeugrumpf, erfolgt keine Störung des in der Rumpfnase oder dem vorderen Rumpfsegment untergebrachten Bordradars. Auch wird durch die Anordnung der erfindungsgemäßen Meßvorrichtung im Bereich hinter dem vorderen Rumpfsegment mit dem Bordradar die Meßgenauigkeit nicht beeinträchtigt, so daß keine Erhöhung des Systemaufwands zur Meßdatenkorrektur erforderlich ist.

Im folgenden wird die Erfindung anhand der beiliegenden Figuren beschrieben. Es zeigen:
- Fig. 1 einen Längsschnitt durch den vorderen Teil des Rumpfs eines Luftfahrzeugs mit der erfindungsgemäßen Meßvorrichtung,
- Fig. 2 einen Querschnitt entlang der Linie A-A der Fig. 1,
- Fig. 3 eine Darstellung der Spannungs-Verteilung über den Umfang des Meßquerschnitts in Abhängigkeit des Anstellwinkels alpha, des Schiebewinkels beta und der Machzahl M bei zwei verschiedenen Anstellwinkeln alpha und unveränderter Machzahl M und unverändertem Schiebewinkel beta,
- Fig. 4 eine Darstellung der Spannungs-Verteilung über den Umfang des Meßquerschnitts in Abhängigkeit des Anstellwinkels alpha, des Schiebewinkels beta und der Machzahl M bei zwei verschiedenen Schiebewinkeln beta und unveränderter Machzahl M und unverändertem Anstellwinkel alpha und
- Fig. 5 eine Darstellung der Spannungs-Verteilung über den Umfang des Meßquerschnitts in Abhängigkeit des Anstellwinkels alpha, des Schiebewinkels beta und der Machzahl M bei zwei verschiedenen Machzahlen M und unverändertem Anstellwinkel alpha und Schiebewinkel beta.

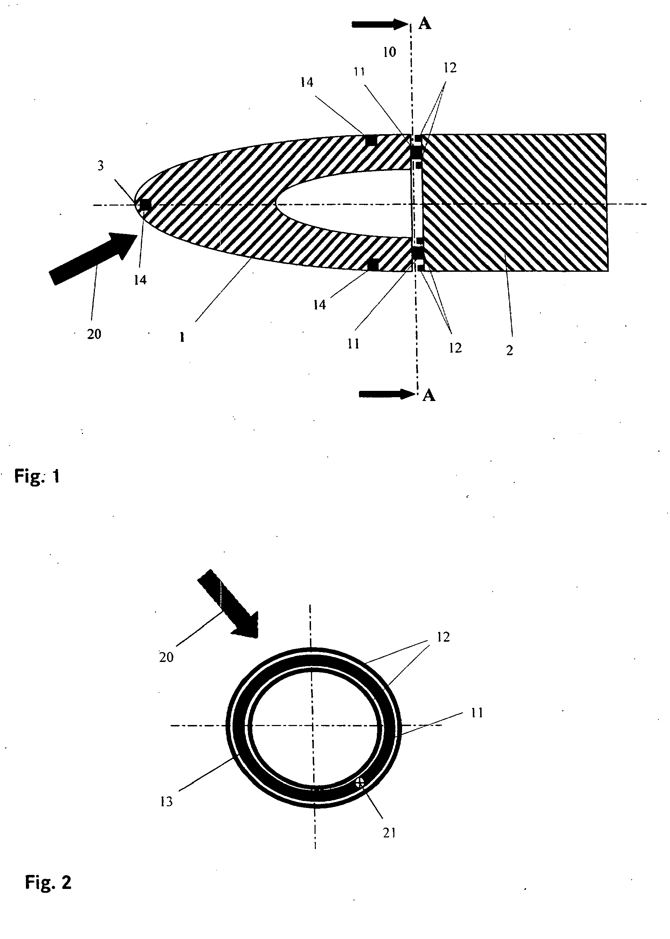

Fig. 1 zeigt ein in Flugrichtung gesehen vorderes Rumpfsegment oder Rumpfnasensegment 1 und ein hinteres Rumpfsegment 2, die den vorderen Teil eines Flugzeugrumpfs bilden. Zwischen dem vorderen 1 und dem hinteren 2 Rumpfsegment ist eine zumindest abschnittsweise über dem Umfang angeordnete, d.h. über zumindest einen Maßabschnitt messende Meßvorrichtung 10 vorgesehen. Die Meßvorrichtung 10 erfaßt einen äquivalenten Belastungsverlauf in zumindest einem Meßabschnitt mit einer Erstreckung in Umfangsrichtung, wobei der Meßabschnitt jeweils auch eine flächenmäßige Ausdehnung haben kann. In der Ausführungsform nach der Figur 1 ist die Meßvorrichtung 10 eine Kraftmeßvorrichtung 11. Aus dem von der Meßvorrichtung ermittelten äquivalenten Belastungsverlauf wird dann - u.a. unter Berücksichtigung der Trägheitskräfte, die auf das vordere Rumpfsegment 1 gegenüber dem hinteren Rumpfsegment 2 wirken, - durch Vergleich mit zumindest einer Kalibrierkurve der gesuchte Satz von Luftdaten abgeleitet. Ein Satz von Luftdaten weist dabei vorzugsweise den Anstellwinkel, den Schiebewinkel, den statischen und den dynamischen Druck sowie die daraus abgeleitete Machzahl auf.

Das vordere Rumpfsegment 1 weist eine Spitze 3 auf und kann beispielsweise das Radom eines Flugzeugs sein, in dem ein Radargerät (nicht gezeigt) angebracht ist. In diesem Fall ist häufig vorgeschrieben, daß keine weitere Meßeinrichtung bzw. kein weiteres Gerät, und insbesondere keine Luftdatensensorik, am vorderen Rumpfsegment 1 angebracht sein darf, da dies die Funktion eines Radargeräts stören würde. Das hintere Rumpfsegment 2 ist vorzugsweise von vorne, d.h. von der Spitze 3 aus gesehen noch vor dem Cockpit angebracht.

Das vordere Rumpfsegment 1 und das hintere Rumpfsegment 2 können in einer ersten, in der Figur 1 gezeigten Ausführungsform der Erfindung zur Durchführung der Belastungsmessung jeweils physisch gesonderte Bestandteile des Rumpfs sein, wobei erfindungsgemäß die zwischen dem vorderen 1 und hinteren 2 Rumfsegment auftretenden Kräfte zur Ermittlung des äquivalenten Belastungsverlaufs verwendet werden. In einer alternativen zweiten, in den Figuren nicht dargestellten Ausführungsform kann das vordere 1 zusammen mit dem hinteren 2 Rumpfsegment auch einheitlich gestaltet sein, wobei die Ermittlung des äquivalente Belastungsverlaufs dann über die Bestimmung des Dehnungs- oder Spannungsverlaufs in dem zumindest einen Meßabschnitt zwischen dem vorderen 1 und hinteren 2 Rumpfsegment erfolgt.

In der ersten Ausführungsform, in der der Meßabschnitt also über den gesamten Umfang des Rumpfes an der Stelle zwischen dem vorderen 1 und dem hinteren 2 Rumpfsegment verläuft, können zwischen den Rumpfsegmenten 1, 2 auch Abstandselemente 12 angeordnet sein. Die vorgesehenen Abstandselemente 12 sollen die auftretenden Verformungen aufgrund äußerer Luftlasten und Trägheitskräften limitieren, um somit eine Überlastung der Meßvorrichtung 11 zu verhindern.

Es können im Bereich zwischen dem vorderen 1 und dem hinteren 2 Rumpfsegment zusätzlich Führungselemente (nicht gezeigt) vorgesehen sein, um das vordere Rumpfsegment 1 relativ zum hinteren Rumpfsegment 2 insbesondere in radialer Richtung auszurichten.

In Fig. 2 ist der Schnitt A-A durch die Meßvorrichtung 10 bzw. Kraftmeß-Vorrichtung 11 mit Blickrichtung von vorne gezeigt, so daß die Kraftmeß-Vorrichtung 10 in ihrem Querschnitt 13 sowie die Anordnung der Abstandselemente 12 in Bezug auf die Meßvorrichtung 10 dargestellt ist. Die Kraftmeß-Vorrichtung 11 erfaßt den Belastungsverlauf über den Meßabschnitt, d.h. in der Ausführungsform nach der Figur 1 und 2 über den gesamten Umfang des Rumpfes. Der Belastungsverlauf stellt in diesem Fall also ein Kraftverlauf dar. Der Querschnitt 13, in dem der Kraftverlauf gemessen wird, verläuft vorzugsweise innerhalb der Außenkontur des Flugzeugrumpfes an dieser Stelle. Die Abstandselemente 12 sind vorzugsweise radial innerhalb und außerhalb des Querschnitts 13 der Kraftmeßvorrichtung 11 angeordnet. Alternativ dazu könnte jedoch auch nur ein Abstandselement radial innerhalb oder außerhalb des Querschnitts 13 angeordnet sein. Die Abstandselemente 12 müssen nicht in Umfangsrichtung kontinuierlich verlaufen, sondern können auch an ausgewählten Punkten innerhalb oder außerhalb entlang des Umfangs des Querschnitts 13 angebracht sein. Die Abstandselemente 12 können jedoch auch in anderer Weise als in den Fig. 1 oder 2 dargestellt nach dem Stand der Technik gestaltet sein.

Weiterhin ist in der Ausführungsform nach den Figuren 1 und 2 entweder im vorderen 1 oder im hinteren 2 Rumpfsegment zumindest ein Beschleunigungs-Aufnehmer 14 zur Erfassung der Trägheitskräfte angeordnet. Der zumindest eine Beschleunigungs-Aufnehmer 14 dient der Erfassung der beispielsweise infolge dynamischer Flugmanöver oder Strukturkopplungen auf das vordere Rumpfsegment 1 wirkenden Trägheitskräfte. Dies kann auch durch Messung der Beschleunigung an einer geeigneten Stelle im hinteren Rumpfsegment 2 geschehen, wenn geeignete Annahmen über das Gewicht und die Struktur des vorderen Rumpfsegments 1 und eine geeignetes Schätzverfahren zur Ableitung der Trägheitskräfte am vorderen Rumpfsegment 1 angewendet werden. Die Trägheitsmessung ist erforderlich, da mit der Meß-Vorrichtung 10 die aerodynamischen Lasten zuzüglich der Trägheitskräfte gemessen werden, jedoch für die Bestimmung der Luftdaten lediglich die aerodynamischen Lasten erforderlich sind. In einer Ausführungsform ist lediglich ein dreiachsiger Beschleunigungs-Aufnehmer 14 im vorderen Rumpfsegment 1 vorgesehen, der von der Symmetrieachse 15 des Rumpfnasensegments 1 beabstandet angeordnet ist. Zur Verbesserung der Messung können in dieser Variante dort auch noch weitere Beschleunigungs-Aufnehmer 14 vorgesehen sein. Diese sind dann vorzugsweise achsen- oder punktsymmetrisch zum zuerst genannten Beschleunigungs-Aufnehmer 14 angeordnet. In einer weiteren Variante sind mehrere Beschleunigungs-Aufnehmer 14 im Bereich der Umfangsfläche des Rumpnasen-Segments 1 angeordnet. Ein einzelner oder zusätzlicher Beschleunigungs-Aufnehmer 14 relativ nahe der Spitze 3 hat den Vorteil, daß bei Nickschwingungen die maximale Beschleunigung im Rumpfnasensegment 1 erfaßt wird.

Der Zweck der in dem Rumpfquerschnitt 13 integrierten Meß-Vorrichtung 10 liegt in der Ermittlung der Kraftverteilung entlang des Umfangs. Dies läßt sich beispielsweise auch durch die Verwendung von Dehnungsmeßstreifen (DMS) erreichen, die in bekannter Weise über den Umfang oder über zumindest einem Abschnitt in dem Bereich zwischen dem vorderen 1 und hinteren 2 Rumpfsegment angeordnet sind. In diesem Fall ist das vordere Rumpfsegment 1 einheitlich mit dem hinteren Rumpfsegment 2 ausgeführt. Das dabei zugrunde liegende Meßprinzip liegt in der Widerstandsänderung eines Drahtes infolge einer Materialdehnung. Dieser Dehnung und der damit verbundenen Widerstandsänderung läßt sich über eine Kalibrierung eine entsprechende Kraft zuordnen. Zur Erhöhung der Genauigkeit und zur Temperaturkompensation können die DMS in einer sogenannten Vollbrücke (Wheatston'sche Brücke) zusammen geschaltet sein. Jedem einzelnen Kraftmeßpunkt in dem Meßquerschnitt entspricht somit eine DMS-Vollbrücke. Die Redundanz des Meßsystems läßt sich mit zunehmender Anzahl von Meßstellen, d.h. Kraftmeßpunkten, erhöhen, da davon auszugehen ist, daß sich der Kurvenverlauf der Kraft im Meßquerschnitt auch bei Ausfall einzelner Meßpunkte noch mit hinreichender Genauigkeit eindeutig ermitteln läßt.

Eine weitere Möglichkeit der Kraftmessung besteht in der Verwendung von Drucksensoren, die bei Kenntnis der Fläche, auf die der Druck einwirkt, ebenfalls die Bestimmung der auf das vordere Rumpfsegment 1 wirkenden Gesamtlasten ermöglichen. Dabei können nach dem Stand der Technik z.B. piezoresitive Drucksensoren eingesetzt werden, wobei in diesem Fall das vordere Rumpfsegment 1 als gesondertes Bauteil ausgeführt ist. Das diesen piezoresitive Drucksensoren zugrunde liegende Meßprinzip beruht auf dem piezoresistiven Effekt, d.h. der Änderung des elektrischen Widerstandes von Kristallen unter Einwirkung einer mechanischen Spannung. Über eine Kalibrierung läßt sich dieser Widerstandsänderung bei Kenntnis der Sensorgröße die entsprechende Druckbelastung und somit auch die entsprechende Kraft zuordnen. Die technische Realisierung dieser Sensoren in Form von monokristallinem Silizium ermöglicht die Herstellung von Drucksensoren kleinster Baubabmessungen im Rahmen der sogenannten Dünnschichttechnik.

Weitere Möglichkeiten der Kraftmessung bestehen z.B. in der Verwendung von kapazitiven Drucksensoren, die sich ebenfalls in einer Dünnschichttechnik herstellen lassen.

Weitere Möglichkeiten der Kraftmessung bestehen in der Messung einer Längenänderung mittels optischer Lasermeßmethoden, wobei auch in diesem Fall das vordere Rumpfsegment 1 als gesondertes Bauteil ausgeführt ist. Das zugrunde liegende Meßprinzip beruht auf der Verschiebung eines Interferenzmusters infolge einer Längenänderung des betrachteten Objekts. Dieser Verschiebung des Interferenzmusters kann über eine Kalibrierung eine Längenänderung zugeordnet werden. In einer weiteren Kalibrierung läßt sich dieser Längenänderung eine mechanische Spannung oder auch eine Kraft zuordnen.

Die meßtechnische Realisierung der beschriebenen Meßmethoden erfolgt nach dem Stand der Technik.

Im folgenden wird die Funktionsweise der Erfindung beschrieben:

Je nach der momentanen Flugrichtung des Flugzeugs relativ zur Luft läßt sich die von der Luftströmung auf das vordere Rumpfnasensegment 1 ausgeübte Kraft in Form eines resultierenden Strömungsvektors 20 darstellen. Physikalisch ergibt sich durch diesen Strömungsvektor 20 ein Kraftangriffspunkt 21 an der Meßvorrichtung 10 bzw. am Querschnitt 13 der Kraftmeßvorrichtung 10, der im allgemeinen axial beabstandet zur Rumpf-Längsachse gelegen ist. Dadurch ergibt sich eine bestimmte über den jeweiligen Meßabschnitt der Meß-Vorrichtung 10 in Umfangsrichtung verlaufende Verteilung einer äquivalenten Belastung in Abhängigkeit von dem Anstellwinkel, dem Schiebewinkel, dem statischen und dynamischen Druck sowie der daraus abgeleiteten Machzahl.

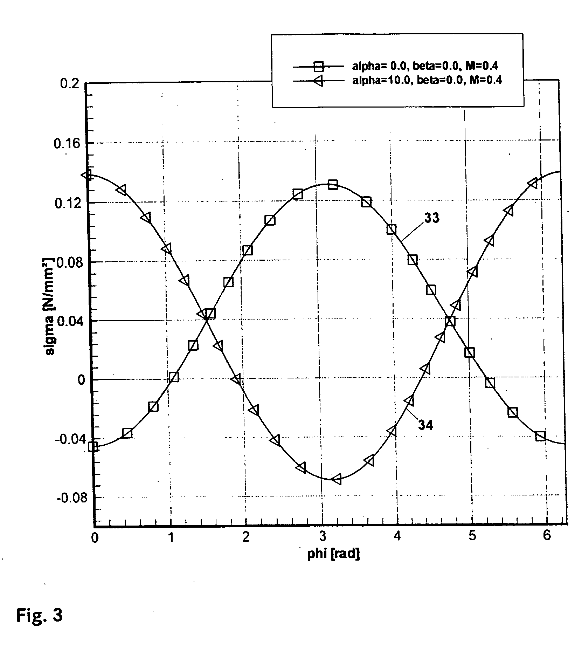

Eine solche Belastungs-Verteilung über den Umfang des Meßabschnitts, der hier der gesamte Rumpf-Querschnitt ist, kann je nach Meßverfahren bzw. verwendeten Meßvorrichtungen 10 eine Kraft- oder Spannungs- bzw. Dehnungs-Messung sein. Eine Belastungs-Verteilung ist für ausgewählte Parameterwerte beispielhaft für einen angenommenen Flugzeugtyp in den Figuren 3, 4 und 5 dargestellt, um die Eignung des Meßverfahrens hinsichtlich der Eindeutigkeit der Zuordnung der gemessenen Belastungs-Verteilungskurven zu bestimmten Flugzustände zu verdeutlichen. Dabei liegt der Darstellung eine Kraftmessung mit einer Vorrichtung nach den Figruren 1 und 2 zugrunde. In der Darstellung der Figuren 3 bis 5 ist der Umfangswinkel ϕ (phi) an der Abszisse 31 aufgetragen. An der Ordinate 32 ist in axialer Richtung eine über den Umfang des Meßquerschnitts 13 auftretende mechanische Spannung aufgetragen, die sich aufgrund des Strömungsvektors 20 an der entsprechenden durch den Winkel ϕ bezeichneten Stelle bei einer entsprechenden Meßvorrichtung 10 im Querschnitt 13 ergibt. Im dargestellten Beispiel ist die Spannung über den Meßquerschnitt in der Einheit N/mm² aufgetragen. Entlang der Abszisse 31 sind die Maßzahlen des Winkels ϕ von 0 bis 2π aufgetragen.

Folgende Kurven sind in die Darstellung der Figur 3 eingetragen: Die Kurve 33 stellt die Spannung über den Meßquerschnitt bei einem Anstellwinkel des Flugzeugs gleich Null und einen Schiebewinkel gleich Null dar. Der Anstellwinkel des Flugzeuges entspricht im allgemeinen nicht dem Anströmwinkel des vorderen Rumpfsegments 1, da der Anströmwinkel des vorderen Rumpfsegments 1 die Richtung der freien Anströmung in Bezug auf die Symmetrielinie des Rumpfsegments 1 ist. Im in den Figuren 3, 4, 5 gezeigten Beispiel ist die Symmtrielinie des vorderen Rumpfsegments 1 gegenüber der Flugzeug-Längsachse um 5.5 Grad nach unten geneigt. Daher ergibt sich in diesem Beispiel auch bei einem Flugzeug-Anstellwinkel von 0 Grad ein Spannungsanteil über den Meßquerschnitt 13, der über den Umfang nicht konstant ist. Mit der Kurve 34 ist der Spannungsverlauf entlang des Umfangs des Meßquerschnitts bei einem positiven Anstellwinkel von 10 Grad und einem Schiebewinkel gleich Null zur Darstellung gebracht. Die Kurven 33 und 34 gelten für eine Machzahl von 0.4.

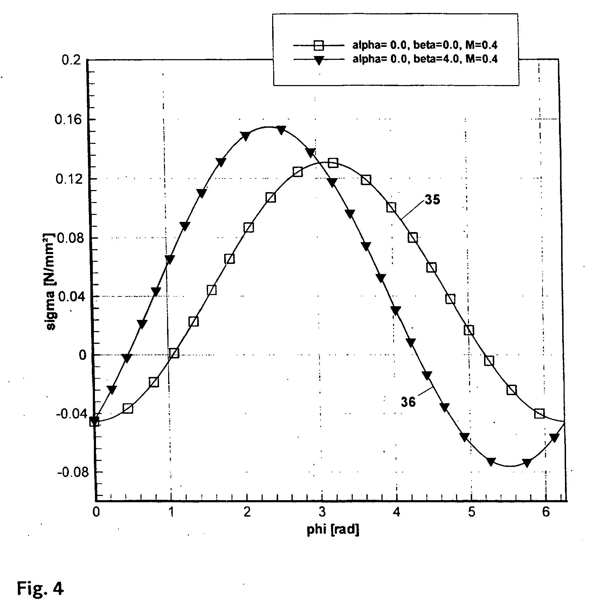

In der Figur 4 ist zum einen ebenfalls der Spannungsverlauf 35 bei einem Anstellwinkel des Flugzeugs gleich Null und einen Schiebewinkel gleich Null dargestellt. Zum anderen zeigt die Figur 4 eine Kurve 36 mit dem Spannungsverlauf bei einem Anstellwinkel gleich Null und einem Schiebewinkel von 4 Grad. Die Kurven 35 und 36 gelten für eine Machzahl von 0.4.

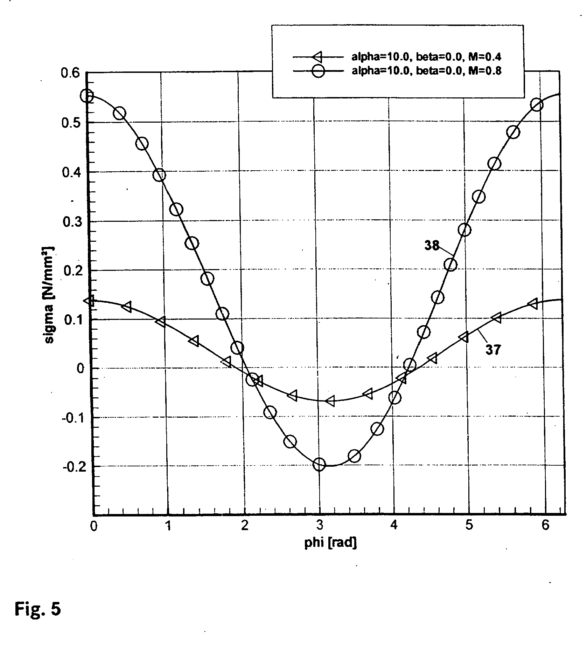

Die Figur 5 zeigt eine Kurve 37, die den Spannungsverlauf entlang des Umfangs des Meßquerschnitts bei einem positiven Anstellwinkel von 10 Grad und einem Schiebewinkel gleich Null bei einer Machzahl gleich 0.4 darstellt. Die Kurve 37 entspricht der Kurve 34 der Figur 3 in einem anderen Maßstab. Die Kurve 38 der Figur 5 zeigt den Spannungsverlauf für einen Anstellwinkel von 10 Grad, einen Schiebewinkel von 0 Grad und einer Machzahl von 0.8.

Die Darstellung der Figuren 3, 4, 5 zeigt, daß sich für jeden Flugzustand ein charakterischer Spannungsverlauf ergibt. Bei der Durchführung und Auswertung des Meßvorgangs im Fluge wird umgekehrt von einem gemessenen Belastungs- bzw. Spannungs-Verlauf auf einen Flugzustand geschlossen. Zu diesem Zeck liegen Kalibrierkurven für jeden in Betracht kommenden Flugzustand vor. Beispielsweise können diese Kalibrierkurven in einem Bordrechner abgespeichert sein. Sie können in einer alternativen Realisierung auch in einer Bodenstation vorliegen und der Kurvenvergleich über telemetrische Datenübetragung vorgenommen werden. Diese Realisierung kann insbesondere bei unbemannten Fluggeräten von Vorteil sein.

Die im Meßquerschnitt 13 auftretenden und in den Figuren 3, 4 und 5 beispielhaft gezeigten Spannungsverläufe bzw. Belastungsverläufe erlauben noch keine direkte eindeutige Bestimmung der gesuchten Meßgrößen, d.h. insbesondere Anstellwinkel α, Schiebewinkel β und Geschwindigkeit *v*_{∞} bzw. Staudruck *q*_{∞} , da der Verlauf der Meßkurve von diesen drei gesuchten Meßgrößen und noch zusätzlich von den auf das vordere Rumpfsegment 1 wirkenden Beschleunigungskräften abhängt. Dabei sind die Geschwindigkeit *v*_{∞}, der Staudruck *q*_{∞}, und die Machzahl M als äquivalente Größen anzunehmen, wobei zur Umrechnung nach bekannten Formeln die statische Temperatur und der statische Luftdruck, wodurch die sogenannte Duckhöhe definiert ist, zu berücksichtigen sind. In einem ersten Schritt sind daher die im Meßquerschnitt 13 gemessenen Kräfte von den mittels Beschleunigungsaufnehmern gemessenen Trägheitskräften, die auf das vordere Rumpfsegment 1 wirken, zu separieren, um somit diejenigen Kräfte zu ermitteln, die aufgrund der aerodynamischen Belastung auf das Rumpfsegment 1 wirken, zu erhalten. Im Rahmen einer Kalibrierung sind alle Kombinationen von α, β, v_{∞} bzw. q_{∞}, die für einen beliebigen Flugzustand innerhalb der Flugenvelope auftreten können und die sich daraus im Meßquerschnitt 13 einstellenden Spannungsverläufe zu ermitteln und in einer Datenbank zu speichern.

Die sich während des Fluges im Meßabschnitt einstellende Belastungs-Verteilung wird permanent mit den in der Datenbank abgespeicherten Kalibrierkurven verglichen. Diejenige Kalibrierkurve, welche die größte Ähnlichkeit mit der im Fluge gemessenen Belastungs-Kurve aufweist, wird zur Zuordnung der gesuchten Meßgrößen zu dem momentanen Flugzustand verwendet.

Die Bestimmung der Kalibrierkurve, welche die größte Ähnlichkeit mit der im Fluge gemessenen und um die Trägheitskräfte bereinigten Kurve aufweist, ist beispielsweise nach der Methode der kleinsten Quadrate möglich.

Die Bestimmung der zugehörigen Kalibrierkurve, die den Flugzustand korrekt beschreibt, kann weiterhin optimiert werden, indem eine Kalibrierkurve, die sich in Übereinstimmung mit einer zum Meßzeitpunkt *t₁* im Fluge gemessenen Kurve befindet, als Startlösung bei der Suche nach der Kalibrierkurve im darauf folgenden Meßzeitpunkt *t₂* verwendet wird. Diese Vorgehensweise baut auf der Annahme auf, daß der Flugkörper innerhalb des Meßzeitintervalls *dt= t₂* - *t₁* nur Positionen im Raum einnehmen kann, die in der Nähe der zum Zeitpunkt *t₁* bekannten Position liegen können. Nach der Identifizierung der korrekten Kalibrierkurve, werden die Werte, die den Flugzustand zum Meßzeitpunkt *t₂* beschreiben, wieder als Startwerte bei der Suche nach einer Lösung für den Meßzeitpunkt *t₃* eingesetzt. Die in Betracht zu ziehenden Möglichkeiten, lassen sich weiter durch die Verwendung der für den Flugkörper gültigen Bewegungsgleichungen einengen. Dies bedeutet, daß bei Vorliegen einer bekannten Startlösung für die gesuchten Größen Anstellwinkel α, Schiebewinkel β und Machzahl M, zu einem Zeitpunkt *t₁* nicht mehr beliebig viele Lösungen für den Zeitpunkt *t₂* in Betracht kommen können, sondern die Lösung für den Zeitpunkt *t₂* aus den Bahndaten zum Zeitpunkt *t₁* auf den Zeitpunkt *t₂* extrapoliert werden können und dadurch bereits eine erste Approximation liefern.

Die Meßvorrichtung 10 liefert bei der systemtechnischen Realisierung im Flugzeug Signale, die den momentanen Anstellwinkel, den momenten Schiebewinkel und den momentan dynamischen Druck beispielsweise an eine Signalvorverarbeitung übergeben und von dort über Analog- oder Digitalleitungen an ein Luftdatensystem weiterleiten, das wiederum mit einem Flugsteuerungssystem mit Stellantrieben und mit Kontrolleinrichtungen im Cockpit sowie mit anderen Systemen bzw. Systemfunktionen gekoppelt ist.

Mit der erfindungsgemäßen Vorrichtung bzw. mit dem erfindungsgemäßen Verfahren lassen sich auch andere physikalische Größen ermitteln, die nach bekannten Verfahren aus den gemessenen und konsolidierten Größen ableitbar sind.

Um Sicherheitsanforderungen zu erfüllen, können sowohl mechanische Bestandteile der Meßvorrichtung 10 als auch deren elektrischen Bestandteile mehrfach vorgesehen sein.

Es können auch andersartige Meßvorrichtungen als die genannten verwendet werden, um den Verlauf einer äquivalenten Belastung über den jeweils vorgesehenen Meßabschnitt zu erfassen. Eine Kombination verschiedenartiger Meßvorrichtungen kann ebenfalls vorgesehen sein.

## Patentansprüche

1. Meßsystem zur Ermittlung eines Satzes von Luftdaten eines Luftfahrzeugs, mit einer Meßvorrichtung zur Erfassung von Meßgrößen, mit einer dieser zugeordneten Auswerte-Einheit zur Ermittlung der Luftdaten aus den Meßgrößen, **dadurch gekennzeichnet,**
**daß** die Meßvorrichtung (10) in einem zumindest teilweise über dem Umfang verlaufenden Meßabschnitt (13) zwischen einem vorderen (1) und einem hinteren Rumpfsegment (2) des Flugzeugs angeordnet ist und Meßgrößen erfaßt, die sich zeitabhängig aufgrund des resultierenden Strömungsvektors (20) und der Trägheitskräfte bilden, die auf das vordere (1) gegenüber dem hinteren Rumpfsegment (2) wirken, wobei die Meßvorrichtung (10) zumindest einen in dem Flugzeug angeordneten Beschleunigungs-Aufnehmer (14) zur Erfassung der auf das vordere Rumpfsegment (1) wirkenden Trägheitskräfte aufweist, und
**daß** die Auswerte-Einheit eine Speichereinheit mit abgespeicherten Kalibrierkurven und eine Vergleichs-Einheit umfaßt, die in dem jeweiligen Flugzustand einen Vergleich von zumindest einer Kalibrierkurve mit der aus den jeweils erfaßten Meßdaten ermittelten Meßkurve vornimmt, um zur Ermittlung des zutreffenden Satzes von Luftdaten diejenige Kalibrierkurve auszuwählen, die die größte Ähnlichkeit mit der Meßkurve aufweist.

2. Meßsystem zur Ermittlung eines Satzes von Luftdaten eines Luftfahrzeugs nach dem Anspruch 1, **dadurch gekennzeichnet, daß** das vordere (1) und das hintere (2) Rumpfsegment zusammen einteilig gestaltet sind und die Meßvorrichtung (10) mehrere am Umfang verteilte Dehnungsmeßstreifen aufweist, die mit der Auswerteeinheit gekoppelt sind.

3. Meßsystem zur Ermittlung eines Satzes von Luftdaten eines Luftfahrzeugs nach dem Anspruch 2, **dadurch gekennzeichnet, daß** die Meßvorrichtung piezoresistive Druckmeß-Sensoren aufweist.

4. Meßsystem zur Ermittlung eines Satzes von Luftdaten eines Luftfahrzeugs nach dem Anspruch 1, **dadurch gekennzeichnet**, der Meßabschnitt über den gesamten Umfang des Rumpfsegments verläuft, der Rumpf zwischen dem vorderen (1) und dem hinteren (2) Rumfsegment getrennt ist und die Meßvorrichtung (10) eine Kraftmeßvorrichtung ist.

5. Meßsystem zur Ermittlung eines Satzes von Luftdaten eines Luftfahrzeugs nach dem Anspruch 1 oder 2, **dadurch gekennzeichnet, daß** die Kraftmeßvorrichtung kapazitive Druckmeß-Sensoren aufweist.

6. Meßsystem zur Ermittlung eines Satzes von Luftdaten eines Luftfahrzeugs nach einem der voranstehenden Ansprüche, **dadurch gekennzeichnet, daß** ein erster Beschleunigungs-Aufnehmer (14) außermittig im vorderen Rumpfsegment (1) und ein weiterer Beschleunigungs-Aufnehmer (14) vorzugsweise achsen- oder punktsymmetrisch zum ersten Beschleunigungs-Aufnehmer (14) angeordnet ist.

7. Meßsystem zur Ermittlung eines Satzes von Luftdaten eines Luftfahrzeugs nach einem der voranstehenden Ansprüche, **dadurch gekennzeichnet, daß** mehrere Beschleunigungs-Aufnehmer (14) über die Umfangsfläche des Rumpfnasen-Segments 1 angeordnet sind.

8. Verfahren zur Bestimmung eines Satzes von Luftdaten eines Luftfahrzeugs mit einem vorderen (1) und einem hinteren (2) Rumpfsegment, zumindest einen in einem Rumpfsegment (1, 2) angeordneten Beschleunigungs-Aufnehmer (14), eine zwischen dem vorderen (1) und dem hinteren (2) Rumpfsegment angeordnete Meßvorrichtung (10) zur Erfassung der Meßdaten und eine Auswerteeinheit zur Ermittlung der Luftdaten aus den Meßdaten aufweist, mit den Schritten:
- Ermittlung der Meßdaten in dem Meßabschnitt, Ermittlung der auf das vordere Rumpfsegment (1) wirkenden Trägheitskräfte mittels des Beschleunigungsaufnehmers (14) und Ermittlung des im Meßabschnitt auftretenden, äquivalenten Belastungsverlaufs, der aufgrund der auf das vordere Rumpfsegment (1) wirkenden aerodynamischen Belastung entsteht,
- zu vorbestimmten Zeitpunkten Vergleich des jeweiligen äquivalenten Belastungsverlaufs mit zumindest einer von mehreren im System abgespeicherten Kalibrierkurven, die aufgrund einer Kalibrierung zumindest für eine Auswahl von Flugzuständen innerhalb der Flugenvelope eine Korrelation der möglichen Kombinationen von Luftdaten im Meßabschnitt (13) auftretenden äquivalenten Belastungsverläufen abgespeichert sind,
- Auswahl derjenigen Kalibrierkurve, welche die größte Ähnlichkeit mit der im Fluge gemessenen Kurve aufweist,
- Zuordnung des zu ermittelnden Satzes von Luftdaten aus der ausgewählten Kalibrierkurve.

9. Verfahren zur Bestimmung von Luftdaten nach dem Anspruch 8, **dadurch gekennzeichnet, daß** die Separierung mittels Messung der auf das vordere Rumpfsegment (1) wirkenden Trägheitskräfte erfolgt.

10. Verfahren zur Bestimmung von Luftdaten nach dem Anspruch 8, **dadurch gekennzeichnet, daß** die Separierung mittels Messung der Beschleunigungen des hinteren Rumpfsegments (2) des Luftfahrzeuges erfolgt.

11. Verfahren zur Bestimmung von Luftdaten nach dem Anspruch 8, 9 oder 10, **dadurch gekennzeichnet, daß** als Startlösung bei der Auswahl der zu vergleichenden Kalibrierkurven diejenige Kalibrierkurve verwendet wird, die im vorangehenden lterationsschritt als zutreffende Lösung ausgewählt worden ist.

12. Verfahren zur Bestimmung von Luftdaten nach dem Anspruch 8, 9, 10 oder 11, **dadurch gekennzeichnet, daß** zur Auswahl der Kalibrierkurve zusätzlich die für das Luftfahrzeug gültigen Bewegungsgleichungen verwendet werden, um von einem Satz von Luftdaten eines vorangegangenen Zeitpunkts mit Hilfe von Bahndaten auf einen Satz von Luftdaten des jeweils relevanten Zeitpunkts zu extrapolieren, die über die Korrelation eine Approximation zur Auswahl der Kalibrierkurve bilden.

## Claims

1. A measuring system for establishing a set of flight data of an aircraft, with a measuring device for recording measured variables, with an evaluation unit associated with the latter for establishing the flight data from the measured variables, **characterised in that**
the measuring device (10) is disposed in a measuring section (13), which extends at least partly over the circumference, between a front (1) and a rear fuselage segment (2) of the aircraft and records measured variables which are formed in a time-dependent manner on the basis of the resultant flow vector (20) and the inertial forces which act on the front (1) as compared with the rear fuselage segment (2), wherein the measuring device (10) comprises at least one acceleration sensor (14), which is disposed in the aircraft, for recording the inertial forces acting on the front fuselage segment (1), and
the evaluation unit comprises a memory unit with stored calibration curves and a comparison unit which in the respective flight condition carries out a comparison of at least one calibration curve with the measured curve established from the measurement data recorded in each case in order to select the calibration curve which has the greatest similarity with the measured curve so as to establish the applicable set of flight data.

2. A measuring system for establishing a set of flight data of an aircraft according to Claim 1, **characterised in that** the front (1) and the rear (2) fuselage segment are formed together as one part and the measuring device (10) comprises a plurality of strain gauges which are distributed over the circumference and are coupled to the evaluation unit.

3. A measuring system for establishing a set of flight data of an aircraft according to Claim 2, **characterised in that** the measuring device comprises piezoresistive pressure sensors.

4. A measuring system for establishing a set of flight data of an aircraft according to Claim 1, **characterised in that** the measuring section extends over the entire circumference of the fuselage segment, the fuselage is separated between the front (1) and the rear (2) fuselage segment and the measuring device (10) is a force-measuring device.

5. A measuring system for establishing a set of flight data of an aircraft according to Claim 1 or 2, **characterised in that** the force-measuring device comprises capacitive pressure sensors.

6. A measuring system for establishing a set of flight data of an aircraft according to any one of the preceding Claims, **characterised in that** a first acceleration sensor (14) is disposed eccentrically in the front fuselage segment (1) and a further acceleration sensor (14) is preferably disposed axially or point symmetrically to the first acceleration sensor (14).

7. A measuring system for establishing a set of flight data of an aircraft according to any one of the preceding Claims, **characterised in that** a plurality of acceleration sensors (14) are disposed over the circumferential surface of the fuselage nose segment (1).

8. A method for determining a set of flight data of an aircraft with a front (1) and a rear (2) fuselage segment, at least one acceleration sensor (14) disposed in a fuselage segment (1, 2), a measuring device (10) disposed between the front (1) and the rear (2) fuselage segment for recording the measurement data and an evaluation unit for establishing the flight data from the measurement data, comprising the steps:
- establishing the measurement data in the measuring section, establishing the inertial forces acting on the front fuselage segment (1) by means of the acceleration sensor (14) and establishing the equivalent load characteristic which occurs in the measuring section and is obtained on the basis of the aerodynamic load acting on the front fuselage segment (1),
- at predetermined instants comparing the respective equivalent load characteristic with at least one of a plurality of calibration curves stored in the system, which curves are stored on the basis of a calibration at least for a selection of flight conditions within the flight envelope a correlation of the possible combinations of flight data (sic) equivalent load characteristics occurring in the measuring section (13),
- selecting the calibration curve which has the greatest similarity with the curve measured during flight,
- assigning the set of flight data to be established from the selected calibration curve.

9. A method for determining flight data according to Claim 8, **characterised in that** the separation takes place by means of measuring the inertial forces acting on the front fuselage segment (1).

10. A method for determining flight data according to Claim 8, **characterised in that** the separation takes place by means of measuring the accelerations of the rear fuselage segment (2) of the aircraft.

11. A method for determining flight data according to Claim 8, 9 or 10, **characterised in that** the calibration curve which was selected as the applicable solution in the preceding iteration step is used as the start solution when selecting the calibration curves which are to be compared.

12. A method for determining flight data according to Claim 8, 9, 10 or 11, **characterised in that,** for selecting the calibration curve, the motion equations valid for the aircraft are additionally used in order to extrapolate from a set of flight data of a preceding instant by means of path data a set of flight data of the respective relevant instant which form via the correlation an approximation for selecting the calibration curve.

## Revendications

1. Système de mesure pour déterminer un jeu de données de vol d'un aéronef comportant un dispositif de mesure pour saisir les grandeurs de mesure, une unité d'exploitation associée à ce dispositif pour déterminer les données de vol à partir des grandeurs de mesure,
**caractérisé en ce que**
le dispositif de mesure (10) est prévu dans un segment de mesure (13) qui occupe au moins en partie la périphérie entre le segment avant (1) et le segment arrière (2) du corps de l'aéronef et il saisit des grandeurs de mesure qui évoluent dans le temps en fonction du vecteur d'écoulement (20) résultant, et des forces d'inertie agissant sur le segment avant (1) par rapport au segment arrière (2) du corps de l'aéronef, le dispositif de mesure (10) comportant au moins un capteur d'accélération (14) installé dans l'aéronef pour saisir les forces d'inertie agissant sur le segment avant (1) du corps de l'aéronef, et
l'unité d'exploitation comporte une unité de mémoire dans laquelle sont enregistrées des courbes de calibrage et une unité de comparaison qui effectue pour l'état de vol respectif, une comparaison entre au moins une courbe de calibrage et la courbe de mesure obtenue à partir des données de mesure chaque fois saisies, pour sélectionner comme courbe de calibrage adaptée au jeu de données de vol, la courbe ayant la plus grande analogie avec la courbe de mesure.

2. Système de mesures pour déterminer un jeu de données de vol d'un aéronef selon la revendication 1,
**caractérisé en ce que**
le segment avant (1) et le segment arrière (2) du corps de l'aéronef constituent une seule pièce et le dispositif de mesure (10) comporte plusieurs jauges de contraintes réparties à la périphérie, ces jauges étant couplées à l'unité d'exploitation.

3. Système de mesures pour déterminer un jeu de données de vol d'un aéronef selon la revendication 2,
**caractérisé en ce que**
le dispositif de mesure comporte des capteurs de mesures de pression piézo-résistifs.

4. Système de mesures pour déterminer un jeu de données de vol d'un aéronef selon la revendication 1,
**caractérisé en ce que**
le segment de mesure s'étend sur toute la périphérie du segment de corps d'aéronef, le corps étant séparé entre le segment avant (1) et le segment arrière (2) et le dispositif de mesure (10) est un dispositif dynamométrique.

5. Système de mesures pour déterminer un jeu de données de vol d'un aéronef selon la revendication 1 ou 2,
**caractérisé en ce que**
le dispositif dynamométrique comporte des capteurs capacitifs de mesure de pression.

6. Système de mesures pour déterminer un jeu de données de vol d'un aéronef selon l'une des revendications précédentes,
**caractérisé en ce qu'**
un premier capteur d'accélération (14) est prévu de façon excentrée dans le segment avant (1) du corps de l'aéronef et un autre capteur d'accélération (14) est prévu, de préférence, symétrique par rapport à une droite ou par rapport à un point vis-à-vis du premier capteur d'accélération (14).

7. Système de mesures pour déterminer un jeu de données de vol d'un aéronef selon l'une des revendications précédentes,
**caractérisé par**
plusieurs capteurs d'accélération (14) répartis sur la surface périphérique du segment (1) du nez de l'aéronef.

8. Procédé de détermination d'un jeu de données de vol d'un aéronef comportant un segment avant (1) et un segment arrière (2) de corps d'aéronef, au moins un capteur d'accélération (14) installé dans un des segments (1, 2), un dispositif de mesure (10) installé entre le segment avant (1) et le segment arrière (2) du corps de l'aéronef, ce dispositif de mesure saisissant des données de mesure, ainsi qu'une unité d'exploitation pour déterminer les données de vol à partir des données de mesure,
procédé comprenant les étapes suivantes :
- détermination des données de mesure dans le segment de mesure,
- détermination des forces d'inertie appliquées au segment avant (1) du corps de l'aéronef par l'intermédiaire du capteur (14),
- détermination de l'évolution de la charge équivalente produite dans le segment de mesure, engendrée par la sollicitation aérodynamique agissant sur le segment avant (1) du corps,
- comparaison, à des instants prédéfinis, de la courbe de charge respectivement équivalente et d'au moins l'une des courbes de l'ensemble des courbes de calibrage enregistrées en mémoire dans le système, courbes qui, sur la base d'un calibrage, ont été enregistrées au moins pour sélectionner un état de vol à l'intérieur de l'enveloppe de vol, avec une corrélation des combinaisons possibles de données de vol d'un segment de mesure (13) pour les évolutions de charge équivalentes produites,
- sélection de la courbe de calibrage qui présente la plus grande analogie avec la courbe mesurée en vol, et
- association du jeu de données de vol ainsi obtenu à partir de la courbe de calibrage sélectionnée.

9. Procédé de détermination d'un jeu de données de vol d'un aéronef selon la revendication 8,
**caractérisé en ce que**
la séparation se fait à l'aide de la mesure des forces d'inertie agissant sur le segment avant (1) du corps de l'aéronef.

10. Procédé de détermination d'un jeu de données de vol d'un aéronef selon la revendication 8,
**caractérisé en ce que**
la séparation se fait par la mesure des accélérations du segment arrière (2) du corps de l'aéronef.

11. Procédé de détermination d'un jeu de données de vol d'un aéronef selon les revendications 8, 9 ou 10,
**caractérisé en ce que**
comme grandeur initiale pour la sélection des courbes de calibrage à comparer, on utilise la courbe de calibrage sélectionnée comme solution appropriée au cours de l'étape d'itération précédente.

12. Procédé de détermination d'un jeu de données de vol d'un aéronef selon l'une des revendications 8, 9, 10 ou 11,
**caractérisé en ce que**
pour sélectionner la courbe de calibrage, on utilise en outre les équations de mouvement applicables à l'aéronef, pour extrapoler à partir d'un jeu de données de vol, un instant antérieur, à l'aide des données de trajectoire, un jeu de données de vol à l'instant respectif, et qui constitue par la corrélation, une approximation pour la sélection de la courbe de calibrage.
